**Europäisches Patentamt**

**European Patent Office**

**Office européen des brevets**

(19)

(11) Veröffentlichungsnummer: **0 017 890**
**A1**

# (12) EUROPÄISCHE PATENTANMELDUNG

(21) Anmeldenummer: 80101853.2

(22) Anmeldetag: 08.04.80

(51) Int. Cl.³: **F 24 J 3/02**

(30) Priorität: 24.04.79 IT 1256079

(43) Veröffentlichungstag der Anmeldung: **29.10.80**
**Patentblatt 80/22**

(84) Benannte Vertragsstaaten: **AT BE CH DE FR GB LI LU
NL SE**

(71) Anmelder: **Camerano, Angelo, Via Mignone 42/1A,
I-17100 Savona (IT)**

(72) Erfinder: **Camerano, Angelo, Via Mignone 42/1A,
I-17100 Savona (IT)**

(74) Vertreter: **Porsia, Dino, c/o Succ. Ing. Fischetti & Weber
Via Caffaro 3, I-16124 Genova (IT)**

(54) **Plattensammler für Sonnenstrahlung.**

(57) Ein Rohrnetz (10) aus vorzugsweise gerippten, metallischen Rohren ist luftdicht und möglichst berührungslos in einer Außenhülle (2) eingeschlossen, in der ein Vakuum gebildet ist und die ein Raster aus mehreren, untereinander durch Verbindungskanäle (7) verbundenen Kollektorkammern (6) aufweist. Zumindest die Kollektorkammern (6) sind auf der Oberseite von durchsichtigen, nach außen kuppel-, halbkugel- oder linsenförmig konvexen Wänden und auf der Unterseite durch inwärts reflektierenden, vorzugsweise ebenfalls nach außen konvexen Wänden begrenzt.

EP 0 017 890 A1

0017890

- 1 -

## Plattensammler für Sonnenstrahlung

Die Erfindung betrifft einen Plattensammler für Sonnenstrahlung, einen sogenannten Sonnenkollektor, mit einem
Rohrsystem, in dem eine zu erwärmende Flüssigkeit fliesst.

Aufgabe der Erfindung ist es, einen Plattensammler bzw.
Sonnenkollektor dieser Art zu schaffen, der ein besseres
Absorptionsvermögen der Sonnenstrahlung aufweist und insbesondere in der Lage ist, eine im wesentlichen konstante
Menge von Sonnenstrahlung zu absorbieren, ohne dazu verstellt und dauernd gegen die Sonne gerichtet werden zu
müssen.

Diese Aufgabe wird erfindungsgemäss mit einem Plattensammler der eingangs genannten Art gelöst, der dadurch
gekennzeichnet ist, dass das Rohrsystem aus gut wärmeleitendem, die Sonnenstrahlung möglichst gut absorbierendem
Werkstoff, insbesondere Metall besteht und vakuumdicht
sowie möglichst berührungslos in einer Aussenhülle eingeschlossen ist, in der ein Vakuum gebildet ist und deren
obere, der Sonne zugekehrte Seite aus durchsichtigem Werk= stoff und deren untere, der Sonne abgekehrte Seite aus inwärts reflektierendem Werkstoff bestehen. Vorzugsweise weist zumindest der Werkstoff der Unterseite der Aussen= hülle wärmeisolierende Eigenschaften auf. Die Oberseite, vor= zugsweise auch die Unterseite der Aussenhülle bestehen vorzugsweise aus Glas, Kunststoff od. dgl., insbesondere Acrylharz.

Eine besonders vorteilhafte, bevorzugte Ausführungsform des erfindungsgemässen Plattensammlers ist dadurch gekenn= zeichnet, dass die Aussenhülle mehrere, untereinander durch Verbindungskanäle verbundene Kollektorkammern auf= weist, die zumindest auf der Oberseite, d.h. auf der der Sonne zugekehrten Seite des Plattensammlers von durch= sichtigen, nach aussen konvexen Wänden begrenzt sind, wobei sich die Rohre des in der Aussenhülle eingeschlossenen Rohrsystems durch die Kollektorkammern und die Verbindungs= kanäle hindurch erstrecken.

Auf der Unterseite des Plattensammlers sind die Kollektor= kammern und/oder die Verbindungskanäle von inwärts reflektierenden Wänden begrenzt, die auch eben bzw. flach sein können, jedoch vorzugsweise ebenfalls nach aussen konvex ausgebildet sind. Nach einem bevorzugten Merkmal der Erfindung sind die Kollektorkammern kugelförmig, kugel= ähnlich oder insbesondere linsenförmig ausgebildet und untereinander durch zylinderförmige Verbindungskanäle ver= bunden. In vorteilhafter Weiterentwicklung des Erfindungs= gedankens kann die Aussenhülle des Plattensammlers aus zwei komplementären, aufeinanderliegenden Hüllenhälften bestehen, die untereinander umfangsseitig und in den Bereichen zwischen den Kollektorkammern und zwischen den Verbindungskanälen vakuumdicht verbunden (geklebt oder geschweisst)
sind. Die obere Hüllenhälfte besteht vorzugsweise aus
durchsichtigem Kunststoff und weist nach aussen vorspringende, kuppelförmige Ausbuchtungen zur Bildung der Kollektorkammern, sowie nach aussen vorspringende, kanalartige
Ausbuchtungen zur Bildung der Verbindungskanäle der Aussenhülle auf. Die untere Hüllenhälfte besteht aus reflektierend ausgebildetem Kunststoff und kann flach oder vorzugsweise ähnlich oder gleich der oberen Hüllenhälfte ausgebildet, d.h. mit nach aussen vorspringenden, kuppelförmigen Ausbuchtungen im Bereich der einzelnen Kollektorkammern und mit nach aussen vorspringenden, kanalförmigen
Ausbuchtungen im Bereich der Verbindungskanäle der Aussenhülle versehen sein.

Weitere Merkmale der Erfindung und die damit erzielten
Vorteile ergeben sich aus den Unteransprüchen und der
nachstehenden Beschreibung eines bevorzugten,in der
Zeichnung dargestellten Ausführungsbeispiels.

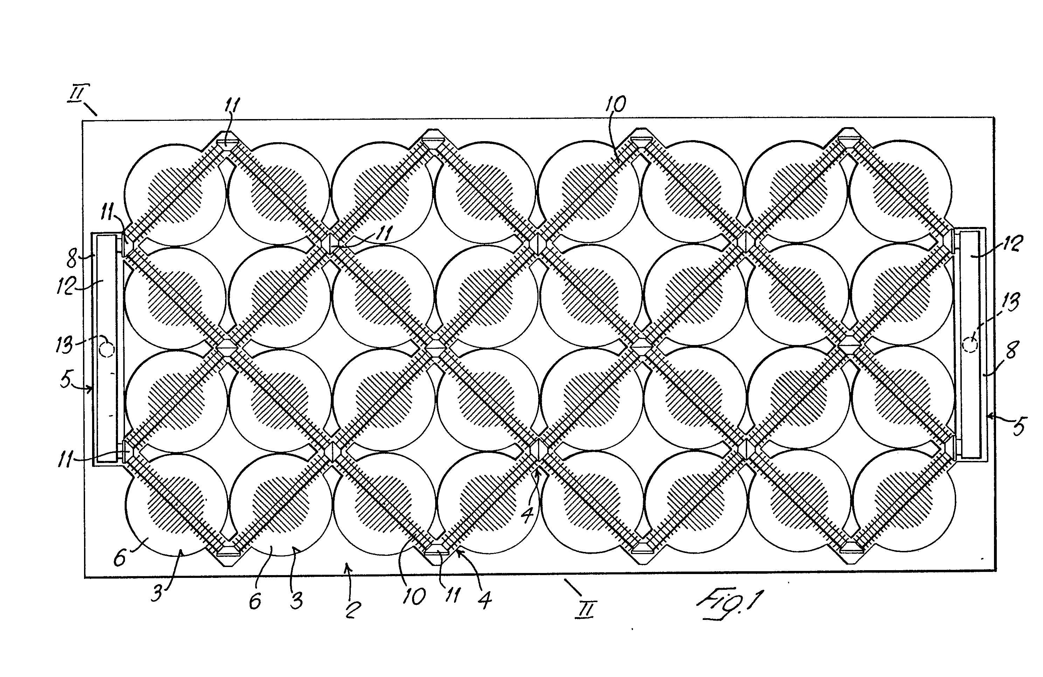

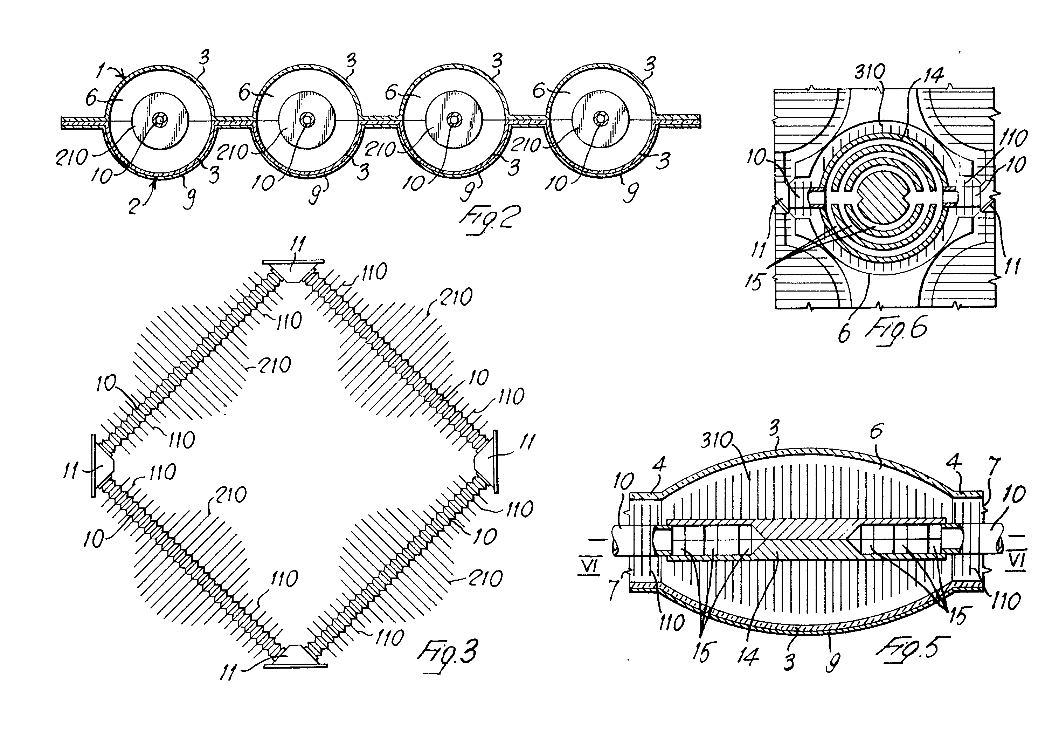

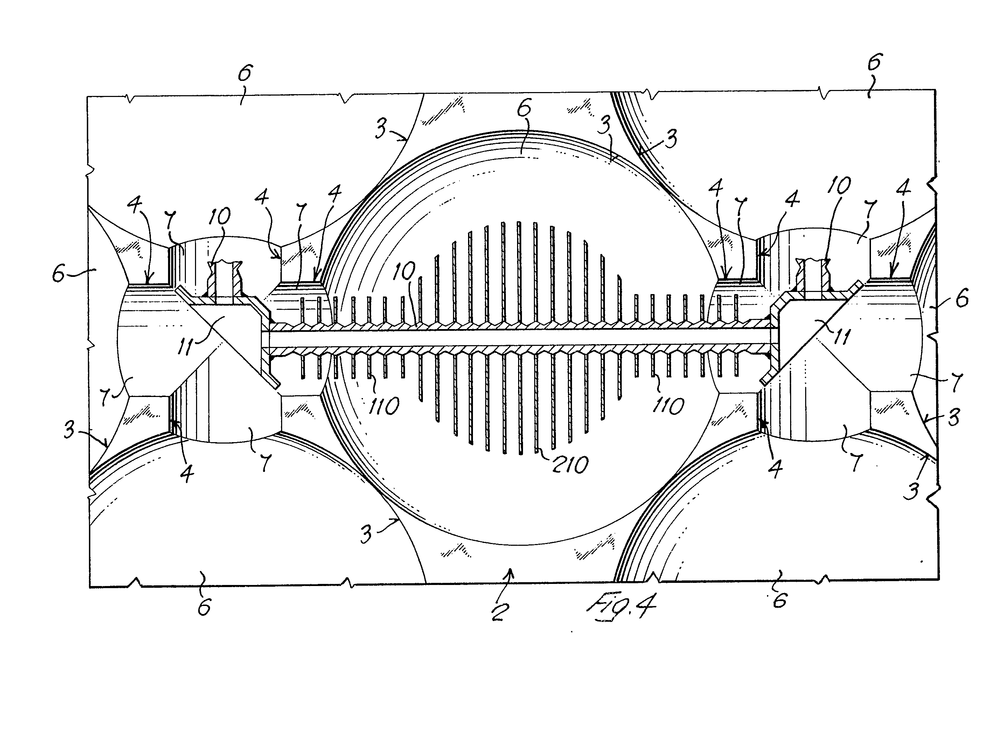

Fig. 1 zeigt im Grundriss einen geöffneten Plattensammler für Sonnenstrahlung nach der Erfindung; Fig.
2 ist ein Querschnitt nach der Linie II-II der Fig.
1; Fig. 3 zeigt eine Baueinheit des inneren Rohrsystems des Plattensammlers; Fig. 4 zeigt im Querschnitt einen Teil des Rohrsystems des Plattensammlers; Fig. 5 zeigt einen Querschnitt durch eine
Kollektorkammer einer Ausführungsvariante des Platten= sammlers nach Fig. 1 bis 4; Fig. 6 ist ein waage= rechter Schnitt durch die Kollektorkammer der Aus= führungsvariante nach der Linie VI-VI der Fig. 5.

Der dargestellte Plattensammler für Sonnenstrahlung, soge= nannter Sonnenkollektor, besteht aus zwei übereinanderlie= genden und zueinander komplementären Hüllenhälften 1, 2, von denen jede kuppelförmige, nach aussen vorspringende, im wesentlichen halbkugelförmige Ausbuchtungen 3 aufweist, die untereinander durch nach aussen vorspringende, kanal= förmige, im wesentlichen halbzylindrische Ausbuchtungen 4 verbunden sind. Im Bereich zweier entgegengesetzter Um= fangsseiten weisen die beiden Hüllenhälften 1, 2 im wesent= lichen halbrohrförmige, nach aussen vorspringende Aus= buchtungen auf, die durch kanalförmige Ausbuchtungen 4 mit dem übrigen Raster von kuppelförmigen Ausbuchtungen 3 und kanalförmigen Ausbuchtungen 4 verbunden sind.

Die beiden Hüllenhälften 1 und 2 sind untereinander gleich, so dass nach ihrem Aufeinanderlegen die zusammenfallenden, kuppelförmigen Ausbuchtungen 3 entsprechende, im wesent= lichen kugelförmige bzw. kugelähnliche Kollektorkammern 6 bilden, deren Begrenzungswände nach aussen ausgewölbt sind. Die zusammenfallenden, kanalförmigen Ausbuchtungen 4 bilden entsprechende, im wesentlichen zylinderförmige Kanäle bzw. Leitungen 7, die die Kollektorkammern 6 untereinander und mit den rohrförmigen Kammern 8 verbinden, welch letztere im Bereich der beiden entgegengesetzten Umfangsseiten des Plattensammlers von den zusammenfallenden, halbrohrförmigen Ausbuchtungen 5 gebildet werden.

Zumindest die obere, d.h. der Sonne zugekehrte Hüllenhälfte 1 besteht aus durchsichtigem, vorzugsweise auch wärmeisolie= rendem Werkstoff, meistens aus Kunststoff, insbesondere aus durchsichtigem Acrylharz. Die untere Hüllenhälfte 2 kann aus beliebigem, vorzugsweise wärmeisolierendem Werkstoff bestehen und ist inwärts spiegelnd ausgebildet. Im allge= meinen besteht auch die untere Hüllenhälfte 2 aus durch= sichtigem Kunststoff, vorzugsweise Acrylharz, und ist durch einen äusseren Belag, z.B. einer äusseren Metallisierungs= schicht 9 nach innen reflektierend ausgebildet.

Die beiden aufeinandergelegten Hüllenhälften 1 und 2 sind auf ihrem ganzen Umfang und in den Bereichen um die Kollektorkammern 6, 8 sowie um die Verbindungskanäle 7 herum luftdicht miteinander verbunden und bilden eine vakuumdicht geschlossene Aussenhülle, in der ein Vakuum erzeugt und ein Rohrsystem 10 eingeschlossen ist. Das Rohrsystem 10 besteht aus einem Netz von sich untereinander kreuzenden und an den Kreuzungsstellen miteinander kommuni= zierenden Rohren. Dieses Rohrnetz 10 ist vorzugs= weise aus Baueinheiten der in Fig. 3 dargestellten Art zusammengesetzt. Jede Baueinheit besteht aus vier Rohr= stücken 10, die ein Quadrat, ein Rechteck oder ein anderes Vieleck bilden und an den Ecken dieses Vielecks mit Hilfe von Anschlüssen 11 untereinander verbunden sind. Mit Hilfe dieser Anschlüsse 11 wird auch jede Baueinheit des Rohr= netzes 10 mit den Ecken der anliegenden Baueinheiten ver= bunden. Im Bereich der beiden, den rohrförmigen Kammern 8 entsprechenden Umfangsseiten des Plattensammlers sind die Baueinheiten 10 des Rohrnetzes 10 über die Anschlüsse 11 mit einem in der betreffenden Kammer 8 angeordneten Sammel= rohr 12 verbunden, das seinerseits mit einem vakuumdicht aus der Kammer 8 des Plattensammlers herausgeführten Ein- bzw. Auslaufstutzen 13 für die zu erwärmende Flüssigkeit in Verbindung steht. Im Bereich der beiden anderen Umfangs= seiten des Plattensammlers sind die Anschlüsse 11 mit Hilfe von passenden Deckeln geschlossen.

Die Rohre des in der Aussenhülle 1, 2 eingeschlossenen Rohr= systems 10 bestehen aus Metall, insbesondere Aluminium, und weisen äussere Rippen 110, 210 auf. Die äussere Mantel= fläche der Rohre des Rohrsystems 10 ist vorzugsweise gewellt oder zwischen den Rippen 110, 210 zickzackförmig profiliert, wie insbesondere aus Fig. 4 hervorgeht. Die Aussenflächen des Rohrsystems 10 und/oder der Rohrrippen 110, 210 und/ /oder der Anschlüsse 11 sind vorzugsweise geschwärzt. Die Rohre des Rohrnetzes 10 erstrecken sich in diametraler Richtung durch die Kollektorkammern 6 hindurch und koaxial zu den Verbindungskanälen 7. Die Anschlüsse 11 liegen im Bereich der Kreuzungsstellen zwischen den Verbindungs= kanälen 7. Die Umfangsränder der Rohrrippen 110 im Bereich der Verbindungskanäle 7 liegen auf einer gedachten zylin= drischen Fläche. Die Umfangsränder der Rohrrippen 210 im Bereich der Kollektrokammern 6 liegen auf einer gedachten, kugelförmigen oder kugelähnlichen Fläche. Die Rohrrippen 210 berühren nicht die Begrenzungswände der Aussenhülle 1, 2 im Bereich der betreffenden Kollektorkammer 6. Auch die Berührung zwischen den Rohrrippen 110 in den Verbindungs= kanälen 7 bzw. den Anschlüssen 11 einerseits und den beiden Aussenhüllenhälften 1, 2 andererseits ist vermieden oder auf das kleinste konstruktionsmässig unentbehrliche Mass beschränkt.

Der vorstehend beschriebene Plattensammler besteht also aus einem Netz 10 von metallischen, gerippten und geschwärzten Rohren, die infolgedessen die Sonnenstrahlung in höchstem Mass absorbieren. Dieses Rohrnetz 10 ist in einer Aussen= hülle 1, 2 eingeschlossen, die auf der der Sonne zugekehr= ten Seite durchsichtig und auf der entgegengesetzten Seite nach innen reflektierend ist. Diese Aussenhülle ist zumin= dest auf der der Sonne zugekehrten Seite durch eine Viel= zahl von nach aussen konvexen Wänden 3, 4 begrenzt. In der Aussenhülle ist ein Vakuum erzeugt. Infolgedessen und ins= besondere infolge der oberen, konvexen Wände 3, 4 der Aussenhülle 1, 2 absorbiert der erfindungsgemässe Platten= sammler die Sonnenstrahlung in optimal gleichförmiger und vom Einfallwinkel im wesentlichen unabhängiger Weise, wobei der Plattensammler nicht bewegt zu werden braucht, um ihn dauernd gegen die Sonne zu richten. Infolgedessen wird mit feststehendem erfindungsgemässem Plattensammler eine bedeutende gleichförmige Konzentration der einge= fangenen Sonnestrahlung erzielt. Gleichzeitig wird auch die bestmögliche Ausnutzung der eingefangenen Sonnestrahlung gewährleistet, da das Rohrnetz 10, das die Sonnenstrahlung mit hohem Wirkungsgrad absorbiert und dadurch die durch das Rohrnetz strömende Flüssigkeit erwärmt, durch das in der Aussenhülle 1, 2 hergestellte Vakuum von der Aussen= luft wärmeisoliert ist. Dadurch werden Wärmeverluste durch Konvektionsströmungen vermieden. Durch die Anordnung der unteren, reflektierenden Flächen 9 kann der erfindungs= gemässe Plattensammler auch die gestreute Sonnenstrahlung einfangen und sie auf das innere Metallrohrnetz 10 konzen= trieren. Die Rohrrippen 110, 210 und die äussere gewellte bzw. zickzackförmig profilierte Mantelfläche der Rohre 10 verhindern eine nach aussen verlorene Reflektion der ein= fallenden Sonnenstrahlung und bilden praktisch eine Strahlungsfalle.

Die in den Figuren 5 und 6 dargestellte Ausführungsvariante des Plattensammlers entspricht im wesentlichen der vor= stehend beschriebenen Ausführungsform nach Fig. 1 bis 4, wobei gleiche Teile mit den selben Bezugszeichen versehen sind. Die Kollektorkammern 6 der Aussenhülle bzw. die ent= sprechenden Ausbuchtungen 3 der Hüllenhälften 1, 2 sind jedoch flach kuppelförmig, insbesondere linsenförmig aus= gebildet. Das in der Aussenhülle 1, 2 eingeschlossene Rohr= system 10 weist in den Kollektorkammern 6 je einen etwa kreisscheibenförmigen Abschnitt 14 auf, der mit mehreren, konzentrischen, ringförmigen, untereinander und mit dem Rohrnetz 10 in Verbindung stehenden Durchflusskanälen 15 sowie mit Rippen 310 auf seinen beiden Flachseiten versehen ist. Die ringförmigen Durchflusskanäle 15 sind so ausgelegt, dass in den Kollektorkammern 6 ein gegenüber dem restlichen Teil des Rohrnetzes 10 erweiterter Durchflussquerschnitt und infolgedessen eine geringere Strömungsgeschwindigkeit erzielt werden.

## Patentansprüche

1. Plattensammler für Sonnenstrahlung mit einem Rohrsystem, in dem eine zu erwärmende Flüssigkeit fliesst, dadurch gekennzeichnet, dass das Rohrsystem (10) aus gut wärmeleitendem, die Sonnenstrahlung möglichst gut absorbierendem Werkstoff, insbesondere Metall besteht und vakuumdicht sowie möglichst berührungslos in einer Aussenhülle (1, 2) eingeschlossen ist, in der ein Vakuum gebildet ist und deren obere, der Sonne zugekehrte Seite (1) aus durchsichtigem Werkstoff und deren untere, der Sonne abgekehrte Seite (2) aus inwärts reflektierendem Werkstoff bestehen.

2. Plattensammler nach Anspruch 1, dadurch gekennzeichnet, dass zumindest der Werkstoff der Unterseite (2) der Aussenhülle wärmeisolierende Eigenschaften aufweist und die Oberseite (1) vorzugsweise auch die Unterseite (2) der Aussenhülle aus Glas, Kunststoff od. dgl. insbesondere Acrylharz bestehen.

3. Plattensammler nach Anspruch 1 oder 2, dadurch gekennzeichnet, dass die Aussenhülle (1, 2) mehrere, untereinander durch Verbindungskanäle (7) verbundene Kollektorkammern (6) aufweist, die zumindest auf der Oberseite d.h. auf der der Sonne zugekehrten Seite des Plattensammlers von durchsichtigen, nach aussen konvexen Wänden begrenzt sind, wobei sich die Rohre des in der Aussenhülle eingeschlossenen Rohrsystems (10) durch die Kollektorkammern (6) und die Verbindungskanäle (7) hindurch erstrecken.

4. Plattensammler nach den vorgehenden Ansprüchen, dadurch gekennzeichnet, dass auf der Unterseite (2) des Platten= sammlers die Kollektorkammern (6) und/oder die Verbindungs= kanäle (7) von inwärts reflektierenden, vorzugsweise eben= falls nach aussen konvexen Wänden begrenzt sind.

5. Plattensammler nach den vorgehenden Ansprüchen, dadurch gekennzeichnet, dass die Kollektorkammern (6) kugelförmig, kugelähnlich oder insbesondere linsenförmig und die Ver= bindungskanäle (7) im wesentlichen zylinderförmig ausge= bildet sind.

6. Plattensammler nach den vorgehenden Ansprüchen, dadurch gekennzeichnet, dass die Aussenhülle aus zwei komplementä= ren, aufeinanderliegenden Hüllenhälften (1, 2) besteht, die untereinander umfangsseitig und in den Bereichen zwischen den Kollektorkammern (6) und zwischen den Verbindungskanä= len (7) vakuumdicht verbunden sind.

7. Plattensammler nach Anspruch 6, dadurch gekennzeichnet, dass die obere Hüllenhälfte (1) aus durchsichtigem Kunst= stoff besteht und nach aussen vorspringende, kuppelförmige Ausbuchtungen (3) zur Bildung der Kollektorkammern (6), sowie nach aussen vorspringende, kanalartige Ausbuchtungen (4) zur Bildung der Verbindungskanäle (7) der Aussenhülle aufweist, während die untere Hüllenhälfte (2) aus inwärts reflektierend ausgebildetem Kunststoff besteht und flach bzw. vorzugsweise in der selben oder ähnlichen Weise wie die obere Hüllenhälfte (1) ausgebildet ist.

8. Plattensammler nach den vorgehenden Ansprüchen, dadurch gekennzeichnet, dass das in der Aussenhülle (1, 2) einge= schlossene Rohrsystem (10) aus gerippten Rohren besteht.

9. Plattensammler nach den vorgehenden Ansprüchen, dadurch gekennzeichnet, dass die äussere Mantelfläche der Rohre des Rohrsystems (10) gewellt oder zickzackförmig profiliert ist.

10. Plattensammler nach den vorgehenden Ansprüchen, dadurch gekennzeichnet, dass die äussere Mantelfläche und/oder die Rippen der Rohre des Rohrsystems (10) geschwärzt sind.

11. Plattensammler nach den vorgehenden Ansprüchen, dadurch gekennzeichnet, dass die Umfangsränder der Rohrrippen (110) des Rohrsystems (10) im Bereich der Verbindungskanäle (7) der Aussenhülle (1, 2) auf einer im wesentlichen zylindri= schen, gedachten Fläche und im Bereich der Kollektor= kammern (6) der Aussenhülle (1, 2) auf einer im wesent= lichen kugel- bzw. linsenförmigen, gedachten Fläche liegen.

12. Plattensammler nach den vorgehenden Ansprüchen, dadurch gekennzeichnet, dass das Rohrsystem (10) aus einem Rohrnetz besteht, das im Bereich zweier entgegengesetzter Umfangs= seiten der Platte mit Ein- und Ausgängen (13) für die Flüssigkeit verbunden ist.

13. Plattensammler nach den vorgehenden Ansprüchen, dadurch gekennzeichnet, dass das Rohrnetz aus Baueinheiten zu= sammengesetzt ist, die aus je einem von Rohren gebildeten Vieleck bestehen, das an den Ecken Anschlüsse (11) zur Ver= bindung mit anliegenden Baueinheiten aufweist.

14. Plattensammler nach den vorgehenden Ansprüchen, dadurch gekennzeichnet, dass das Rohrsystem (10) in den Kollektor= kammern (6) der Aussenhülle (1, 2) mindestens je einen Abschnitt (14) mit erweitertem Durchflussquerschnitt (15) aufweist.

15. Plattensammler nach Anspruch 14, dadurch gekennzeichnet, dass das Rohrsystem (10) in den Kollektorkammern (6) der Aussenhülle (1, 2) je einen kreisscheibenförmigen Abschnitt (14) aufweist, der mit mindestens einem ringförmigen Durchflusskanal (15) und mit Rippen (310) auf seinen Flachseiten versehen ist.

Fig.1

0017890

Fig.6

Fig.5

Fig.2

Fig.3

Fig.4

## EUROPÄISCHER RECHERCHENBERICHT

**Europäisches Patentamt**

Nummer der Anmeldung

EP 80101853.2

| Kategorie | Kennzeichnung des Dokuments mit Angabe, soweit erforderlich, der maßgeblichen Teile | betrifft Anspruch |
|---|---|---|
| A | DE - A1 - 2 555 015 (ERNO RAUM-FAHRTTECHNIK GMBH)<br>+ Gesamt + | 1,3,6, 12,13 |
| | -- | |
| A | CH - A5 - 594 212 (HONEGGER)<br>+ Spalte 1, Zeilen 40-57 + | 1,2 |
| | -- | |
| A | DE - A1 - 2 620 940 (HEILEMANN, VOLKMAR)<br>+ Gesamt + | 1,2,3 |
| | -- | |
| A | DE - A1 - 2 617 452 (ZVY)<br>+ Fig. 3; Seite 5 + | 1,2,6 |
| | -- | |
| A | DE - A1 - 2 603 725 (OWENS-ILLINOIS, INC.)<br>+ Seiten 2, 16, 17 + | 1,2 |
| | -- | |
| A | DE - A1 - 2 601 976 (BENNETT)<br>+ Seite 2, Absatz 1; Seite 9, Absatz 3 + | 1,2 |
| | -- | |
| A | DE - A1 - 2 558 612 (ZINK)<br>+ Fig. 3 + | 1,2 |
| | -- | |
| A | DE - A1 - 2 552 102 (FRANCIA)<br>+ Fig. 3c + | 9 |
| | -- | |
| A | DE - A1 - 2 508 339 (KELLER)<br>+ Gesamt + | 1,2,3 |
| | -- | |

**KLASSIFIKATION DER ANMELDUNG (Int.Cl. 3)**

F 24 J 3/02

**RECHERCHIERTE SACHGEBIETE (Int. Cl. 3)**

F 24 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 25-06-1980 | SCHMIDT |

EPA form 1503.1  05.78

Europäisches Patentamt

EUROPÄISCHER RECHERCHENBERICHT

0017890

Nummer der Anmeldung

EP 80101853.2

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| A | US - A - 3 929 121 (BRUCE, C. ROGERS)<br>+ Gesamt +<br>-- | 5,10 |
| A | US - A - 3 983 861 (WESTMAN MAN)<br>+ Fig. 6 +<br>-- | 8 |
| A | US - A - 3 987 783 (HAYWARD)<br>+ Spalte 2; Fig. 4 +<br>-- | 5,6 |
| A | US - A - 3 587 559 (NONAKA)<br>+ Gesamt +<br>---- | 5 |

KLASSIFIKATION DER ANMELDUNG (Int.Cl. X 3

RECHERCHIERTE SACHGEBIETE (Int. Cl. X) 3

EPA Form 1503.2  06.78